Europäisches Patentamt

European Patent Office

Office européen des brevets

(19)

(11) Veröffentlichungsnummer: **0 103 089**
**B1**

(12) # EUROPÄISCHE PATENTSCHRIFT

(45) Veröffentlichungstag der Patentschrift:
29.10.86

(51) Int. Cl.⁴: **G 01 B 3/22**

(21) Anmeldenummer: **83106421.7**

(22) Anmeldetag: **01.07.83**

---

(54) **Mehrkoordinaten-Tastkopf.**

---

(30) Priorität: **12.08.82 DE 3229992**

(43) Veröffentlichungstag der Anmeldung:
**21.03.84 Patentblatt 84/12**

(45) Bekanntmachung des Hinweises auf die Patenterteilung:
**29.10.86 Patentblatt 86/44**

(84) Benannte Vertragsstaaten:
**AT CH DE FR GB IT LI NL SE**

(56) Entgegenhaltungen:
EP - A - 0 022 598
DE - A - 2 712 181
DE - B - 1 538 474
DE - B - 1 932 010
GB - A - 1 599 758
US - A - 3 660 906
US - A - 4 114 280

(73) Patentinhaber: **Dr. Johannes Heidenhain GmbH,**
**Nansenstrasse 17, D-8225 Traunreut (DE)**

(72) Erfinder: **Feichtinger, Kurt, Katzwalchen 26,**
**D-8221 Palling (DE)**

---

## Beschreibung

Die Erfindung bezieht sich auf einen sogenannten Mehrkoordinaten-Tastkopf gemäss dem Oberbegriff des Anspruchs 1.

Derartige Tasteinrichtungen werden in Verbindung mit Koordinatenmessmaschinen und auch in numerisch gesteuerten Bearbeitungsmaschinen eingesetzt. Sie dienen zur Erfassung von Werkstück-/Werkzeugabmessungen.

Stellvertretend für Messeinrichtungen nach dem Oberbegriff des Anspruchs 1 sei die DE-B 1 932 010 genannt, die einen Tastkopf aufweist, bei dem der Taststift kugelgelenkartig gelagert ist, und der an seinem dem Tastkontakt gegenüberliegenden Ende eine axial verschiebbar gelagerte Buchse aufweist, die auf einen Messwertwandler einwirkt, so dass jede Auslenkung des Taststiftes in axialer sowie in radialer Richtung eine Axialverschiebung der Buchse zur Folge hat, was durch den Messwertwandler registriert wird. Die Buchse stellt einen Übersetzungskonus dar, mit dessen Hilfe die Auslenkbewegungen des Taststiftes in jedem Fall in eine Axialbewegung umgewandelt werden. Die Auslenkungen des Taststiftes werden durch Lagerschalen – von denen eine axial beweglich ist – im Zusammenwirken mit einem sphärischen Lagerelement am Taststift ermöglicht.

In der DE-A 2 712 181 sind Mehrkoordinaten-Tastköpfe der verschiedensten Bauformen gezeigt. Auch eine lichtelektrisch arbeitende, ein Messignal auslösende Einrichtung ist dort beschrieben.

Eine optoelektronische Messeinrichtung ist auch in der US-A 4 114 280 beschrieben, die einen Einkoordinaten-Tastkopf zeigt.

Aus der GB-PS 1 599 758 ist ferner ein Tastkopf bekannt, der ein elektrisches Signal bei Werkstückberührung abgibt, das durch das Schliessen eines elektrischen Kreises zwischen elektrisch leitfähigem Werkstück und Tastkopf hervorgerufen wird. Der Taststift dieses Tastkopfes weist eine sphärische Antastfläche auf und ist an seinem innerhalb des Tastkopfgehäuses befindlichen Ende linearverschieblich in einer zylindrischen Buchse gelagert. Bei Auslenkungen des Taststiftes wird das der sphärischen Antastfläche gegenüberliegende Taststiftende koaxial verschoben. Der Taststift weist ferner im Innern des Taststiftgehäuses einen Flansch auf, dessen Umfangskante sich bei radialer Auslenkung des Taststiftes am Boden des Taststiftgehäuses abstützt und kippt. Auf einer Kippkante am Flansch wird der Taststift dabei radial verschoben, was ein koaxiales Auswandern des radial gefesselten Taststiftendes zur Folge hat. Bei seiner durch eine Rückstellfeder bewirkten Rückkehr in die Nullage nimmt der Taststift dann wieder eine zentrische Lage ein, da sein radial gefesseltes Ende die Lage in den X-/Y-Koordinaten bestimmt. Die Stirnfläche des Flansches dient dabei als Anschlag in der axialen Z-Richtung. Der letztgenannte Tastkopf ist unbrauchbar, wenn ein elektrisch nicht leitfähiges Werkstück angetastet, d.h. bemessen werden soll.

Aufgabe der Erfindung ist es, einen universell einsetzbaren, mechanisch einfach aufgebauten und zuverlässig arbeitenden Tastkopf zu schaffen, der jedoch nicht die Nachteile der bekannten Tastköpfe aufweist.

Diese Aufgabe wird durch die Merkmale des Anspruches 1 gelöst.

Eine vorteilhafte Ausgestaltung des Tastkopfes ist im Anspruch 2 angegeben.

Die besonderen Vorteile des erfindungsgemässen Tastkopfes liegen in dem einfachen Aufbau, in der sicheren Auslösung des Auslenkungssignales, in der guten Reproduzierbarkeit dieses Signales und in der geringen Störanfälligkeit.

Ein Ausführungsbeispiel wird anhand der Figuren noch näher erläutert. Es zeigt:

Figur 1 den schematischen Aufbau eines Tastkopfes in Längsschnitt,
Figur 2 einen Schnitt durch den Tastkopf entlang der Linie II–II,
Figur 3 eine Variante des Tastkopfaufbaus,
Figur 4 eine weitere Variante des Tastkopfes.

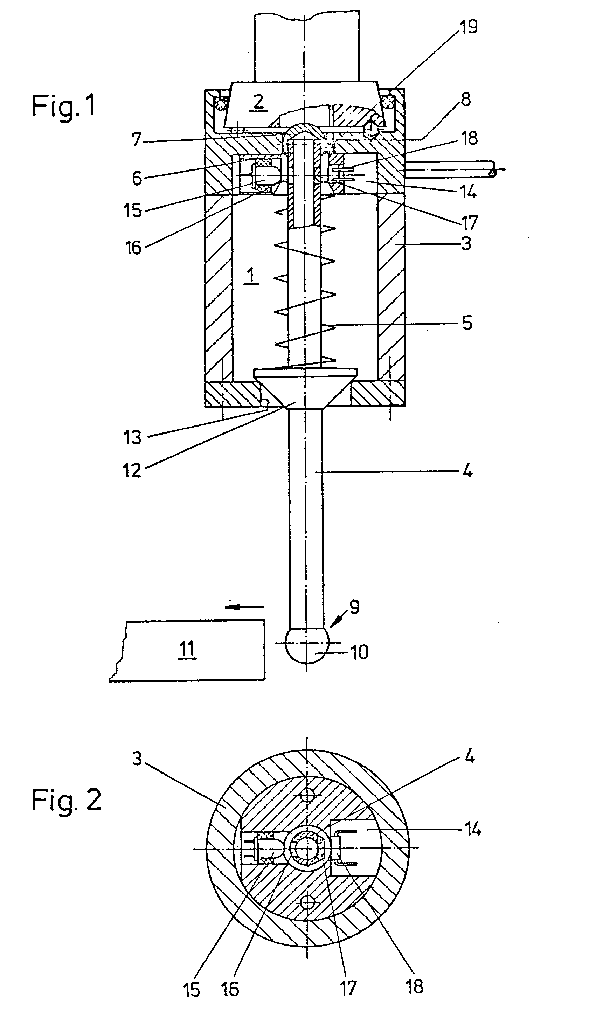

Der in Figur 1 gezeigte Tastkopf 1 weist eine mehrteilige Aufnahmevorrichtung 2 auf, mittels der er in einer nicht dargestellten Spindel einer ebenfalls nicht dargestellten Mess- oder Bearbeitungsmaschine befestigt wird. Der Tastkopf 1 besteht aus einem Tastkopfgehäuse 3 und einem im Tastkopfgehäuse 3 beweglich angebrachten Taststift 4, der durch die Rückstellkraft einer Feder 5 in seine Nullage gedrängt wird. Ein im Innern des Tastkopfgehäuses 3 befindliches Ende 6 des Taststiftes 4 ist nach Art eines Kugelgelenkes 7 radial gefesselt, jedoch in axialer Richtung verschieblich in einer zylindrischen Führung 8 im Tastkopfgehäuse 3 gelagert.

Mit einer am freien Ende 9 des Taststiftes 4 angebrachten Antastkugel 10 wird in bekannter Weise ein Werkstück 11 in Pfeilrichtung angetastet. Im Moment des Kontaktes zwischen Antastkugel 10 und Werkstück 11 wird der Taststift 4 geringfügig ausgelenkt. Unmittelbar durch die Auslenkung des Taststiftes 4 verschiebt sich der Taststift 4 entlang der Mantellinie eines Konus 12 in einer Bohrung 13 des Tastkopfgehäuses 3. Diese Verschiebung bewirkt für das andere Ende 6 des Taststiftes 4 eine axiale Hubbewegung, da dieses Ende 6 in der zylindrischen Führung 8 radial gefesselt ist, also nur axiale Bewegungen des Taststiftes 4 möglich sind. Eine unterhalb des gefesselten Taststiftendes 6 angeordnete fotoelektrische Einrichtung 14 wertet diese axiale Hubbewegung aus. Die Auswertung erfolgt durch eine Lichtquelle 15, die durch den Taststift 4 – der einen Durchbruch 16 mit einer Zylinderlinse 17 aufweist – ein Differential-Fotoelement 18 auf der anderen Seite des Taststiftes 4 beleuchtet. Durch die Linse 17 wird das Differential-Fotoelement 18 genau symmetrisch beleuchtet. Bei der geringsten Auslenkung des Taststiftes 4 verändert sich die Beleuchtungssymmetrie, und das Differential-Fotoelement 18 erzeugt eine Ausgangssignalveränderung, die durch eine elektronische Auswerte-Einrichtung als Auslösesignal erkannt wird. Dieses Auslösesignal kann in bekannter Weise zum Steuern eines Messwertzählers benutzt werden, beispielsweise zum Stoppen oder zum Übertragen des Messwertes in einen Speicher.

Es spielt dabei keine Rolle, ob der Taststift 4 in axialer Richtung oder in einer dazu rechtwinklig verlaufenden Ebene ausgelenkt wird, da jede Auslenkbewegung in eine axiale Hubbewegung am radial gefesselten Taststiftende 6 umgesetzt wird.

Wenn der Kontakt zwischen Taststift 4 und Werkstück 11 wieder aufgehoben wird, stellt sich unter der Wirkung der Rückstellkraft der Feder 5 der Taststift 4 in seine Nullage. Die präzise definierte Nullage wird durch den Kegel 12 in der Bohrung 13 in allen drei Koordinatenrichtungen gewährleistet. Der Kegel 12 zentriert den Taststift 4 und legt auch in der Z-Richtung die exakte Position der Antastkugel 10 in bezug auf die Taststiftlage im Tastkopfgehäuse 3 fest.

Eine in Figur 1 gezeigte Verdrehsicherung 19 verhindert die Drehung des Taststiftes 4 im Tastkopfgehäuse 3.

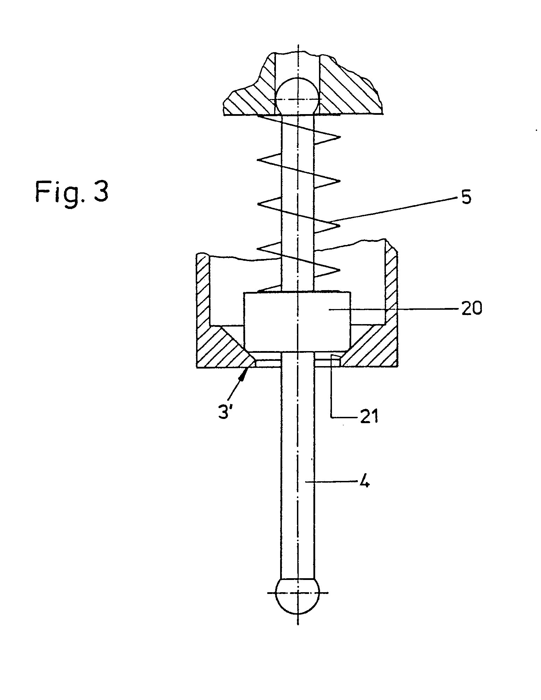

Der Taststift 4 kann mit einem anderen rotationssymmetrischen Formteil versehen werden, beispielsweise mit einem zylindrischen Ansatz 20. Die den Kegelmantel 21 erzeugende Gegenfläche müsste dann im Tastkopfgehäuseboden 3′ vorgesehen sein, wie in Figur 3 gezeigt ist.

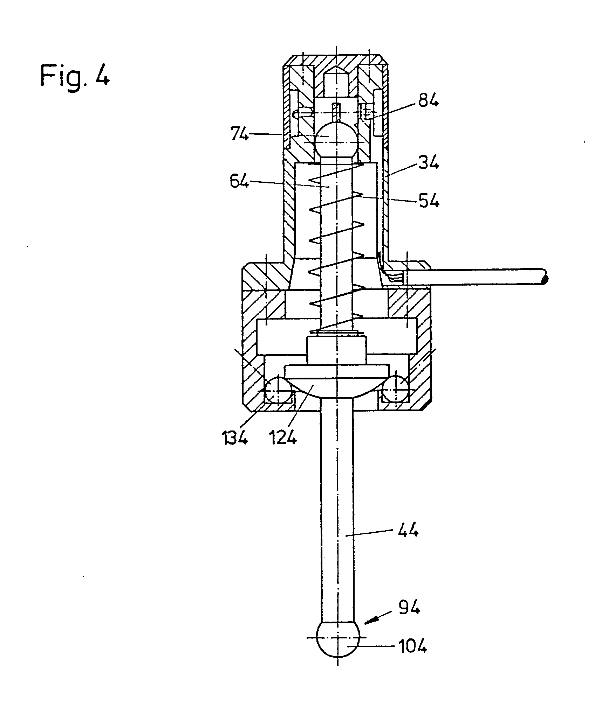

In Figur 4 wird eine weitere Variante des Tastkopfes gemäss Figur 1 gezeigt. Die im wesentlichen gleichen Elemente sind durch gleiche Bezugszeichen mit der ergänzenden Kennziffer «4» bezeichnet. Die Formteile zur Umsetzung der radialen Auslenkung des Taststiftes 44 in eine axiale Richtung und zur räumlichen Zentrierung des freien Taststiftendes 94 sind hier durch einen sphärischen Ansatz 124 dargestellt. Dieser Ansatz 124 liegt auf einer Anzahl von Kugeln 134 auf, die gleichmässig über den inneren Umfang des Tastkopfgehäuses 34 ringförmig verteilt sind.

## Patentansprüche

1. Mehrkoordinaten-Tastkopf (1) mit einem im Tastkopfgehäuse (3) gelagerten, eine definierte Nullage einnehmenden, jedoch in mehrere Richtungen auslenkbaren Taststift (4), mit Flächen zur koaxialen Führung eines radial gefesselten Taststiftendes (6), sowie mit einem rotationssymmetrischen Formteil (12) am Taststift (4), das im Zusammenwirken mit einem korrespondierenden Formteil (13) am Tastkopfgehäuse (3) die räumliche Zentrierung des freien Taststiftendes (9) in der vorgenannten Nullage und die Umsetzung der Auslenkung des freien Taststiftendes (9) in eine axiale Richtung bewirkt, wobei unmittelbar im Bereich des radial gefesselten Taststiftendes (6) eine ein Auslenkungssignal erzeugende Einrichtung (14) vorgesehen ist, dadurch gekennzeichnet, dass die Formteile (12, 13) als Kombination von Kegelstumpf (12) und Bohrung (13) ausgebildet sind, dass die Einrichtung (14) fotoelektrisch arbeitet und mittels eines abbildenden Elementes (17) gesteuert wird, das integraler Bestandteil des Taststiftes (4) ist.

2. Mehrkoordinaten-Tastkopf nach Anspruch 1, dadurch gekennzeichnet, dass die fotoelektrische Einrichtung (14) mit einer Zylinderlinse als dem optisch abbildenden Element (17) eine Leuchtdiode als Lichtsender (15) und ein Differential-Fotoelement als lichtempfindliches Element (18) umfasst.

## Claims

1. Multi-coordinate probe (1) comprising a sensing pin (4) which is supported in the probe housing (3) and assumes a defined zero position but is deflectable in several directions, having areas for coaxially guiding a radially captive sensing-pin end (6) and having a rotationally symmetrical moulded part (12) at the sensing pin (4) which part, in collaboration with a corresponding moulded part (13) at the probe housing (3), effects the spatial centering of the free sensing-pin end (9) in the aforementioned zero position and the conversion of the deflection of the free sensing-pin end (9) into an axial direction, a device (14) generating a deflection signal being provided immediately in the area of the radially captive sensing-pin end (6), characterized in that the moulded parts (12, 13) are constructed as a combination of truncated cone (12) and drilled hole (13), that the device (14) operates photoelectrically and is controlled by means of an imaging element (17) which is an integral component of the sensing pin (4).

2. Multi-coordinate probe according to claim 1, characterized in that the photoelectric device (14), having a cylindrical lens as the optically imaging element (17), comprises a light-emitting diode as the light transmitter (15) and a differential photocell as the light-sensitive element (18).

## Revendications

1. Capteur à multicoordonnées (1) comprenant une tige (4) montée dans le boîtier (3) du capteur, occupant une position zéro définie, mais pouvant être déviée dans plusieurs directions, des surfaces pour le guidage coaxial d'une extrémité (6), attachée radialement, de la tige, ainsi qu'une pièce profilée (12) en forme de corps de révolution qui est placée sur la tige (4) et qui, en coopération avec une pièce profilée correspondante (13) du boîtier (3), assure le centrage spatial de l'extrémité libre (9) de la tige à la position zéro précitée et la transformation de la déviation de l'extrémité libre (9) de la tige en un déplacement axial, un dispositif (14) produisant un signal de déviation étant prévu juste dans la zone de l'extrémité (6), attachée radialement, de la tige, caractérisé par le fait que les pièces profilées (12, 13) sont réalisées en tant que combinaison du tronc de cône (12) et du perçage (13) et que le dis-

positif (14) fonctionne par voie photo-électrique et est commandé au moyen d'un élément de reproduction (17) qui fait partie intégrante de la tige (4).

2. Capteur à multicoordonnées selon la revendication 1, caractérisé par le fait que le dispositif photoélectrique (14) muni d'une lentille cylindrique en tant qu'élément de reproduction optique (17) comprend une diode luminescente en tant qu'émetteur de lumière (15) et un élément photo-électrique différentiel en tant qu'élément sensible à la lumière (18).

Fig.1

Fig. 2

Fig. 3

Fig. 4